# EUROPEAN PATENT APPLICATION

(11) **EP 1 389 704 A1**
(43) Date of publication of application: **18.02.2004**
(21) Application number: 03018447.7
(22) Date of filing: 14.08.2003
(51) Int. Cl.: F16L 9/147, B29C 63/34, B32B 15/04, B32B 1/08, F16L 55/165

(54) **Plastic lined metal pipe and method of manufacture**

(30) Priority: 15.08.2002 AR 0203092
(71) Applicant: Formar S.A., Buenos Aires C1282AFT (AR)
(72) Inventor: Trivelli, Enrique, C1282AFT, Buenos Aires (AR)
(74) Representative: COHAUSZ & FLORACK

(57) **Abstract**

A composite pipe formed by an outer metallic pipe with plastic material inner lining is described. The pipe presents resistance to internal and external pressure defined by the metallic pipe properties, and resistance to aggressive agents defined by the plastic material. The inner lining is a prefabricated plastic material pipe inserted into the metallic pipe, interposing a means able to transmit the internal pressure within the plastic material pipe to the metallic pipe. Also described is a method of manufacturing said composite pipe, wherein a prefabricated thermoplastic material pipe is inserted into a metallic pipe, also interposing a means able to transmit the internal pressure within the plastic material pipe to the metallic pipe.

The invention also describes the use of said composite pipe to convey chemically and/or mechanically aggressive fluids.

## Description

This invention relates to a composite pipe formed by a metallic pipe with inner lining of plastic material, which is resistant to corroding agents due to the plastic material properties, but which also has resistance to internal and external pressure mainly defined by the metallic pipe characteristics.

This invention also relates to a method to manufacture said composite pipe.

Up to date the inner lining of metallic tubes, for example for steel pipelines, constitutes a labor-consuming and expensive work. This lining is generally carried out using nylon or epoxi paints curable at low temperatures, about 65°C, applying the powdered resin by means of electrostatic systems and heating the pipe up to about 200°C, or using phenolic epoxi curable at about 220°C.

The following problems arise when using this type of paints:
1. Surfaces have to be prepared by sand or shot blasting to attain a clean surface quality to grade 2 1/2 of the Swedish Norm for steel cleaning. This means almost bright steel with a surface roughness which improves paint sticking.
2. Lining application is carried out in one or more layers according to the product used, curing each layer, to obtain a thickness between 250 and 350 microns. With greater thickness the lining becomes brittle and sensible to deformations due to the pipe handling, especially bending, as the pipes are 11 to 13-m long.
3. Generally, pipes are stored in stowages until their use. The adequate tools to move them or to load them from the stowages are not always available, and it is common practice to use a lever at one end to raise the pipe to pass a sling underneath, or to move them. This may cause damage to the lining coat, leaving the steel bare or sensibly reducing the thickness of the protective coat.
4. In some cases, the fluid to be conveyed through the pipes carries solid particulates in suspension, and after a time this may erode the lining coat, drastically reducing the lining duration, because of its small thickness.

All these difficulties inclined users to prefer other types of pipes manufactured from materials with better chemical resistance and which show safer results, e.g. thermoset resins reinforced with glass fibers.

These pipes can be joined only by means of screwed joints or flanges. As fluids are conveyed with pressure between 20 and 140 bar, the wall thickness necessary for this type of materials make their cost equal or greater than a coated steel pipe. Also, these materials do not have good resistance to collapse due to external pressure or flectional fatigue, because resistance to the internal pressure is attained by crossed glass fiber meshing fixed with resin..

Other plastic materials resistant to corroding agents are polyalkylenes, which have the following temperature limits:
1. Up to 70°C of service: polyethylene
2. Up to 100°C of service: polypropylene
3. Up to 140°C of service: thermocured resins reinforced with glass fibers.

Pipes made of these plastic materials do not have enough resistance to internal pressure in standard thickness. In most cases their resistance to internal pressure is not more than 10 bar.

This problem could be solved by means of an outer metallic casing, but these plastic pipes with metallic outer reinforcement, e.g. of wire netting or helicoidal wire, are not adequate for long pipelines (several kilometers) made up of joined sections 11 to 13 m-long. This can only be practically attained using metallic pipes, seamed or seamless.

Therefore, the problem was to combine a prefabricated pipe of plastic material with a thickness not greater than the necessary to resist erosion or attacks caused by corrosive agents, with a metallic pipe, to obtain a composite pipe with good resistance to corrosion and pickling, chemical and/or mechanical, attained by the plastic material. Also, the pipe should have resistance to internal pressure as well as compression stress, this attained by the metallic pipe.

Another problem was assembling a pipeline made of metallic pipes with inner lining of plastic material, by means of sleeves or packing rings located in the joint area, and obtaining a completely smooth inner surface.

These problems were solved by the present invention by means of a composite pipe formed by a metallic pipe with inner lining resistant to pickling, in particular made of plastic material, wherein this inner lining consists of a prefabricated pipe of plastic material located inside the metallic pipe, interposing a mechanical load transmission means capable of transmitting the internal pressure of the plastic material pipe to the metallic pipe.

The prefabricated plastic material pipe may have the appropriate thickness to resist pickling, chemical and/or mechanical, for as long as needed, of the fluids to be conveyed through the pipeline constructed with the composite pipes according to the invention. The inner diameter will depend on the fluid-dynamic parameters specified for the pipeline.

On the other hand, the metallic outer component of the composite pipe will have the most appropriate thickness to resist the internal pressure of the fluids to be conveyed through the pipeline, and the compression stresses due to external agents.

The use of standard pipes will probably cause dimension differences between the inner diameter of the metallic pipe and the outer diameter of the prefabricated plastic material pipe. Thus, as the prefabricated plastic material pipe has to be inserted into the metallic pipe, without deteriorating any of them and maintaining the inner surface of the plastic material pipe smooth, a first embodiment of the present invention proposes that the prefabricated inner pipe of plastic material should have an outer diameter less than the inner diameter of the metallic pipe, and the mechanical load transmission means being a settable filling material.

The only condition of the settable filling material, initially in pasty or viscous state, to be filled in the gap between both pipes is that, after setting, its mechanical resistance is enough to act as mechanical load transmissor. Many conventional mortars and/or resins fulfill this condition. Thus, the filling material may be, for example, an inert material, granulate or powder, and a hardening resin which sets at room temperature. Also, the filling material can be an inert material, granulate or powder, mixed with a material which sets with water or a diluent.

According to the invention, the mechanical load transmission means can be an adhesive compatible with the materials of the inner and outer pipes.

In another embodiment of the present invention, the prefabricated plastic material pipe has at least three ribs evenly spaced on the periphery of the plastic material pipe following the direction of the pipe's generatrix. These ribs run along the whole length of the pipe and its width is about 5 to 20% of the plastic material pipe perimeter. Radial height of said ribs is substantially equal or slightly less than the radial space of the gap formed between both concentric pipes. The gap formed between pipes is filled with filling material. This embodiment allows insertion of the prefabricated pipe of plastic material into the metallic pipe with a minimum effort, as there is only a small friction resistance due to the relatively small contact area between the ribs and the metallic pipe. Also, said ribs ensure that the inner pipe is correctly centered.

In another embodiment of the present invention, the mechanical load transmission means is constituted by an adhesive interposed between the outer surface of the prefabricated plastic material pipe and said inner surface of the metallic pipe. This embodiment includes adequate lubricating properties of the adhesive in order to ease insertion of the prefabricated plastic material pipe into the outer metallic pipe, allowing manufacturing of the composite pipe with less space between both pipes. Also, this embodiment may apply to composite pipes which are made by expanding the prefabricated plastic material pipe against the inner surface of the metallic pipe.

Also, in another embodiment of the present invention, the interface between the outer surface of the prefabricated plastic material pipe expanded inside the metallic pipe against its inner surface, and said inner surface of the metallic pipe constitutes the mechanical load transmission means.

The manufacturing method of a composite pipe according to the present invention comprises inserting a prefabricated plastic material pipe into a metallic pipe, interposing a mechanical load transmission means between both pipes.

In a first embodiment of the invention method, the prefabricated plastic material pipe has a smaller outer diameter than the inner diameter of the metallic pipe. This prefabricated plastic material pipe is grasped by one of its ends and dragged into the metallic pipe. At the same time, a settable filling material, or an adhesive, is injected by means of an injection tool in the gap formed between the portion of plastic material pipe being inserted into the metallic pipe and the corresponding extreme portion of the metallic pipe. As the plastic material pipe is being dragged into the metallic pipe, said settable filling material or adhesive is also drawn filling the gap between both pipes, and finally left to set.

This embodiment of the inventive method is adequate for every type of plastic material pipes, thermoplastic or thermorigid.

In other embodiment of the invention procedure, applicable in particular to pipes of thermoplastic material, the plastic material pipe has an outer diameter slightly greater than the inner diameter of the metallic pipe. In this case, the diameter of the plastic material pipe is being reduced during its insertion into the metallic pipe by means of a drawing ring located ahead of the injection tool.

In the latter embodiment, the plastic material properties would determine its capability of deformation by drawing, cold or with a slight raise in temperature.

In a third embodiment of the invention method, the prefabricated pipe is made of thermoplastic material, having an outer diameter smaller than the inner diameter of the metallic pipe, and preferably also a greater length. The plastic material pipe is wholly inserted into the metallic pipe, sealed at both protruding ends, heated up to deformation temperature by means of a heating fluid, and finally expanded by said fluid, under inner pressure, hydraulic or pneumatic. Then it is left to cool until resuming its original rigidity. It may be convenient to apply an adhesive on the outer surface of the prefabricated plastic material pipe and/or on the inner surface of the metallic pipe, before inserting the plastic material pipe into the metallic pipe.

In another embodiment of the invention method the pipe is made of thermoplastic material, with an outer diameter equal or greater than the inner diameter of the metallic pipe. The prefabricated pipe made of thermoplastic material is sealed at both ends before being inserted into the metallic pipe, its diameter being reduced by vacuum on the inside and by thermal radiation on the outside. Then, it is inserted with both ends sealed into the metallic pipe and finally expanded applying pressure by means of a heating fluid.

These two embodiments are applicable to pipes made of thermoplastic material.

In all the above embodiments in which the plastic material pipe is deformed, work can be carried out with or without interposing adhesive in the interface between the plastic and metallic components of the composite pipe.

According to the need for each particular application case, the invention procedure also allows to reduce to a minimum, or even completely avoid, the careful preparation of the inner surface of the metallic pipe, which was unavoidable in conventional construction of metallic pipes with inner lining.

Using the invention method and its variations, it is possible to manufacture a metallic pipe with plastic inner lining, with or without filling material or adhesive, which fulfills the above indicated requirements, i.e. have a smooth inner surface, be resistant to corroding agents as well as to external or internal pressure, have a long working life, be insensible to careless handling, and which can be manufactured from metallic pipes and prefabricated plastic material pipes, whether for mass production or for a small quantity of lined pipes.

The features of the invention and its technical advantages can be seen from the following description of one exemplary embodiment together with the accompanying drawings, in which:
Figure 1 is a view of an axial and cross section of one portion of the composite pipe formed by a metallic pipe with inner lining of plastic material, in a first embodiment of the invention.
Figure 2 is a view of the manufacture method of the composite pipe of figure 1.
Figures 3 and 4 show one way of gripping the end of a plastic material pipe, to carry out the method of figure 2.
Figure 5 is a view of a second embodiment of the invention method.
Figure 6 is a schematic view of the third embodiment of the invention method.
Figure 7 is a schematic view of the fourth embodiment of the invention method.

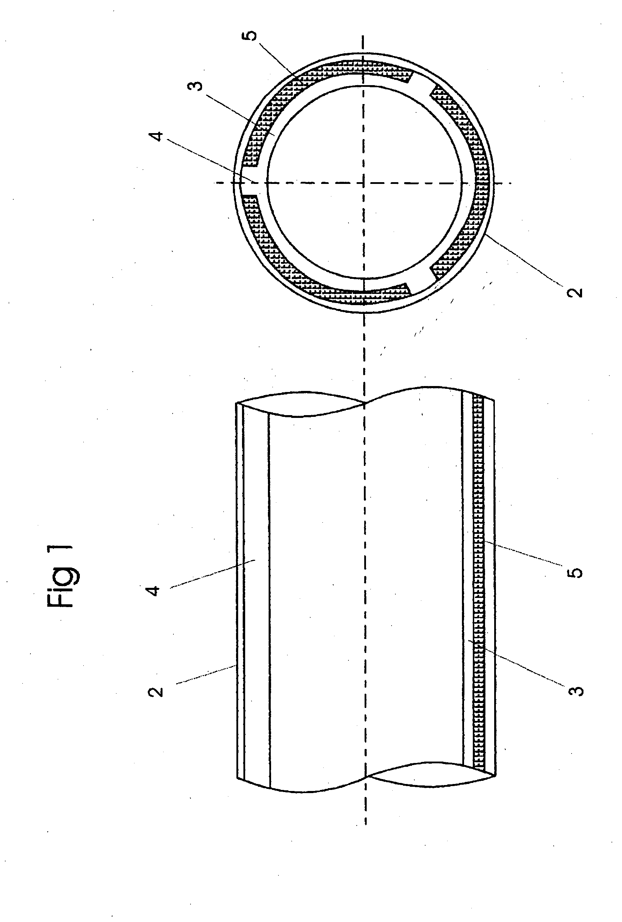

As can be seen in figure 1, the composite pipe of the invention is formed by an outer metallic pipe 2, for example of steel or bronze or other metal, preferably of standard dimensions, for example 6 to 13 m-long. The inner pipe 3, prefabricated of plastic material, is placed inside the steel pipe 2.

When working with steel pipes and prefabricated plastic material pipes, the outer diameter of the plastic material pipe is 2 to 10 mm smaller than the inner diameter of the steel pipe.

The plastic material pipe 3 may have at least three ribs 4, on its outer periphery, extending parallel to the pipe's generatrix direction and evenly spaced on said periphery. These ribs are spaced in an angle of 120° and extend along the whole length of the pipe, in order to improve centering of the plastic pipe inside the metallic pipe.

Ribs 4 can be formed by extrusion together with the plastic material pipe, or they can be applied afterwards on the outer periphery of the plastic material pipe, by adhesive or heat weld.

Radial height of said ribs 4 is slightly less than the radial gap (interspace) between both pipes concentrically placed.

Preferably, the sum of widths of ribs 4, in peripheral direction, is approximately between 5 and 20% of the perimeter of the gap between both concentric pipes. This eases insertion of the plastic material pipe 3 into the metallic pipe 2, with reduced area of friction surfaces between them.

To transfer expansion stresses acting on the plastic material pipe 3 by a fluid being conveyed through it, to the metallic pipe 2, the volume defined by gap 5 between both pipes is filled with a mechanical load transmission means. This load transmission means preferably consists of an inert filling material, which does not attack steel nor plastic, and which also substantially displaces the volume of air in the gap between both pipes. This will prevent corrosion of the steel, and will also mainly transfer the load induced by internal pressure towards the metallic pipe.

To attain this object, it is provided a filling material initially in pasty state prepared from an inert material, powdered or granulate, and a hardening resin which sets at room temperature. It is also possible to use an inert material which sets with water or any other type of diluent. One example of this material is plaster with cement. The product applied, once set, will be resistant to moisture, so it can be stored outdoors without protection until its application at worksite.

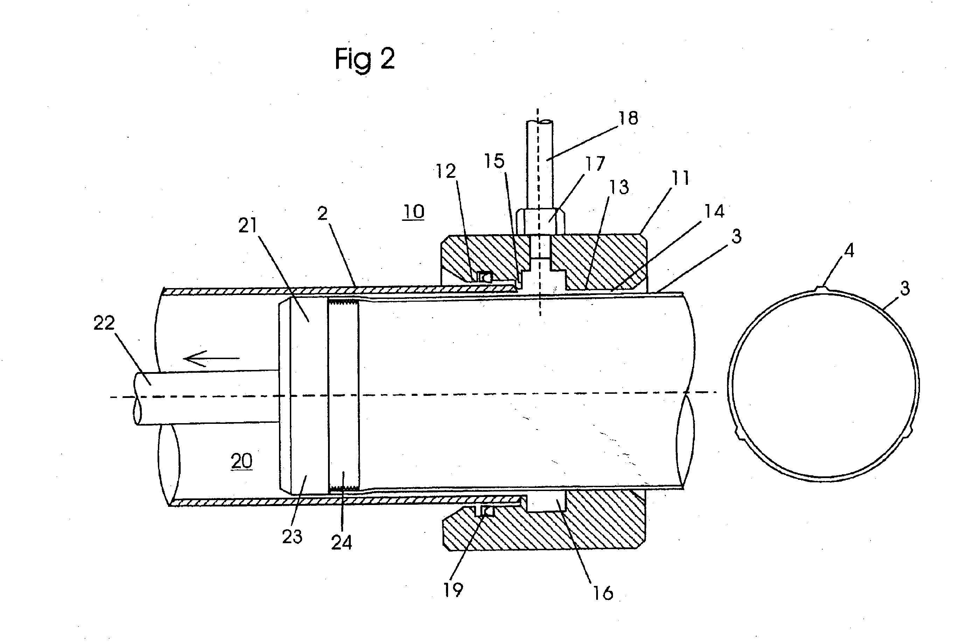

The pasty filling material can be applied with brush or spatula on the plastic pipe before or during its insertion into the steel pipe, filling all the gap between both pipes, or else the pasty material can be injected under pressure during insertion of one pipe into the other. According to a first embodiment of the invention procedure, the prefabricated pipe 3 of plastic material is dragged into the metallic pipe 2, the filling material 5 being injected at the same time as illustrated in figure 2.

For this it is convenient to have an injection tool 10 for the filling material and a dragging tool 20 for. the inner pipe of plastic material, which will described below.

The injection tool 10 for filling material illustrated in figure 2 basically consists of a metallic sleeve 11, which axial opening is defined by a hollow cylindrical front portion 12 which inner diameter is substantially equal to the outer diameter of the metallic pipe 2, and a hollow cylindrical back portion 13 which inner diameter is equal to the outer diameter of the plastic pipe 3. Said hollow cylindrical back portion 13 conveniently has axial grooves 14, substantially corresponding with ribs 4 of the plastic material pipe 3, and which are evenly spaced peripherally as said ribs 4.

In the hollow cylindrical front portion 12 and in front of an undercut 15 formed between the cylindrical front portion 12 and the cylindrical back portion 13, it is provided an inner peripheral groove, in which a packing ring 19 is placed.

An annular recessed chamber 16 has been provided in said hollow cylindrical back portion 13 behind said undercut 15, this annular recessed chamber 16 being connected with an injection pump for pasty filling material (not shown in detail) through a radial hole 17 and a conduit 18.

The dragging device 20 for the inner pipe of plastic material basically includes a piston 21 provided with a traction rod 22. Piston 21 has a cylindrical back portion 23, next to rod 22, which diameter is slightly less than the inner diameter of the metallic pipe 2, and a front portion 24, opposite to rod 22, which outer diameter is equal or slightly greater than the inner diameter of plastic pipe 3.

The invention method to manufacture a composite pipe formed by a metallic pipe with inner lining of a plastic material pipe is as follows:

The metallic pipe 2 is fixed on a work bench (not shown), the injection tool 10 is applied at one end of the metallic pipe so that the free end of the metallic pipe is plugged into the hollow cylindrical front portion 12 of the injection tool 10, the front edge of said metallic pipe lays against undercut 15, and the packing ring 19 tightly seated on the outer periphery surface of the metallic pipe 2.

At the other end of said metallic pipe 2, piston 21 is inserted, being pushed by rod 22 until exiting by the opposite end of said metallic pipe 2 and the injection tool 10 for filling material.

Then, the prefabricated plastic material pipe 3 is placed on the undercut portion 24 of piston 21, of smaller diameter, adequately fixing it, for example by a sawtooth-shaped peripheral grooving.

After these steps, piston 21 is drawn back by means of rod 22 which projects out of the opposite end of the metallic pipe 2, until the front end of the plastic material pipe 3 is axially placed in the space defined by the inner peripheral recessed chamber 16.

Then, the injection pump for filling material is started, at the same time slowly moving the plastic material pipe 3 by means of the piston 21 and rod 22.

Viscosity of the filling material and pressure of the injection pump, as well as the dragging speed of the plastic pipe, have to be adjusted so that the filling material fill the gap between both pipes as soon as it is formed during the advance movement of the plastic inner pipe.

These steps prevent formation of air holes or bubbles in the gap between the pipes, which could cause the breakage of the plastic pipe and further corrosion of the metallic pipe.

Furthermore, the filling material acts as a lubricating agent, easing the dragging of the plastic material pipe into the metallic pipe.

Once the filling material sets, both pipes are worked at both ends.

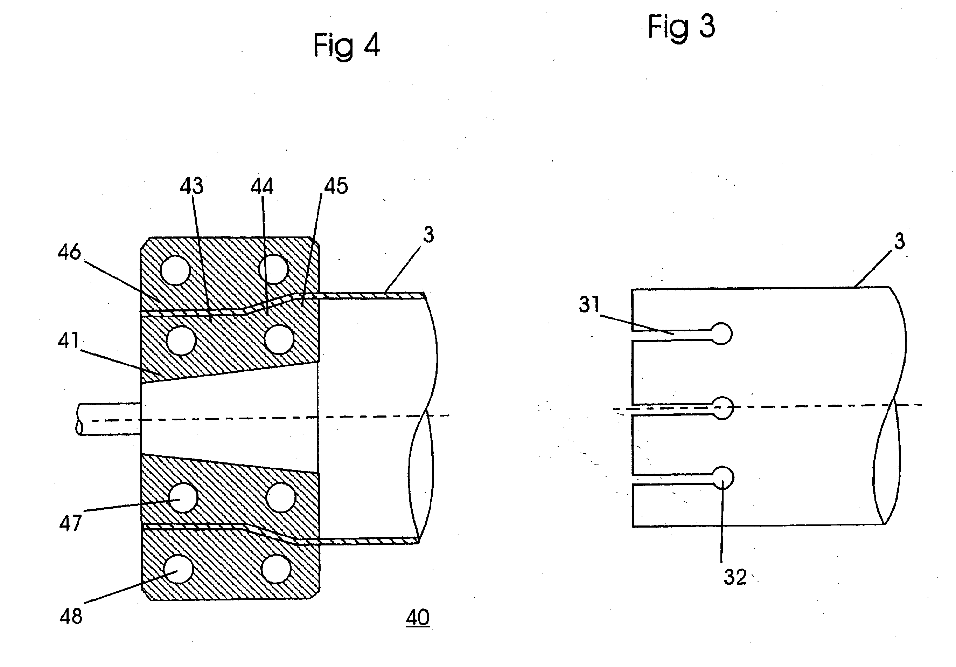

Figure 4 shows a different embodiment of the dragging piston for the plastic material pipe.

In order to improve insertion of the front end of the plastic material pipe into the injection tool and then into the metallic pipe its diameter is reduced. As shown in figure 3, a plurality of grooves 31 are cut at said end of the plastic material pipe 3 in axial direction. Adequately, these grooves 31 terminate in holes 32 of greater diameter than the width of the corresponding groove, in order to prevent the cut to crawl towards the rest of the pipe.

This allows application of a gripper 40, which is made-up by a mandrel 41 radially expansible, which periphery is formed by a cylindrical front portion 43, a truncated cone-shaped intermediate portion 44, and a cylindrical back portion 45; the latter diameter is equal to the inner diameter of the plastic pipe 3; as well as by a ring 46 radially contractile which has a central opening with a similar shape as the outer casing of mandrel 41. Diameters of the congruent portions of said latter axial opening, i.e. the cylindrical front portion, the truncated cone-shaped intermediate portion and the cylindrical back portion, are greater than the diameter of the corresponding portions of the mandrel 41 in a value which is double of the thickness of the wall of the plastic pipe.

The inner mandrel 41 as well as the contractile outer ring 46 have corresponding heating circuits 47, 48, which are formed by channels through which a heating fluid circulates.

To shrink one of the plastic pipe 3 ends, mandrel 41 is inserted into the plastic pipe, the corresponding outer ring 46 is applied in expanded position on the plastic pipe end, both parts of the tool are heated by the heating fluid, the ring is radially contracted and the mandrel 41 is slightly expanded, thus forming the contracted pipe end following the gap shape of both parts of the shaping tool 40.

Disassembly of the shaping tool is carried out reversing the assembly steps indicated above.

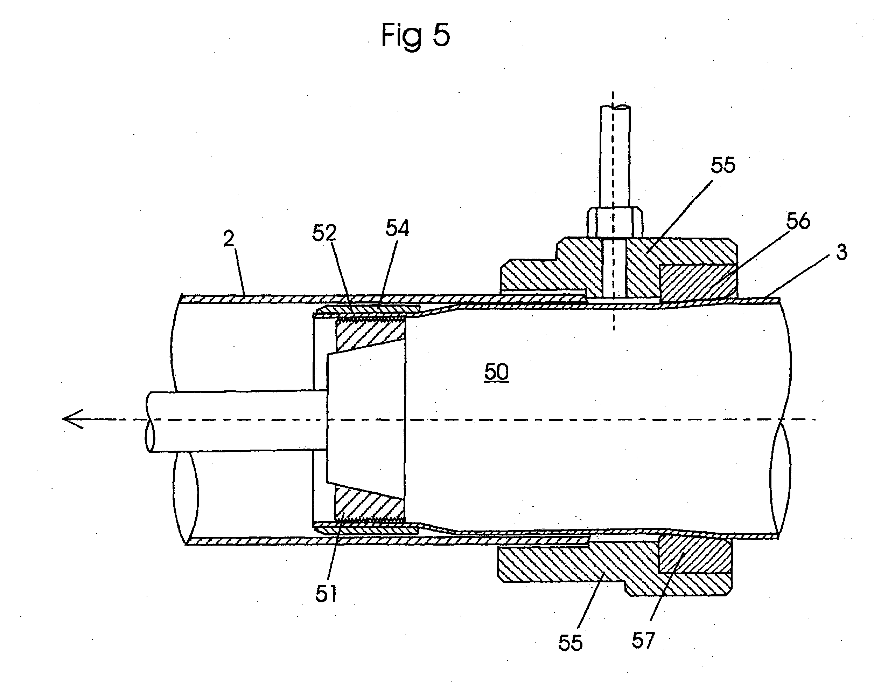

Figure 5 shows other embodiment of the manufacturing procedure of the composite pipe, wherein the prefabricated plastic material pipe 3 initially has an outer diameter slightly greater than the metallic pipe 2 diameter.

As shown in figure 5, a traction tool 50 is applied at the conformed and contracted end of the prefabricated plastic material pipe. This traction tool 50 comprises a cylindrical inner part 51, radially expansible, provided with a sawtooth-shaped peripheral grooving 52, and an outer part formed by a rigid sleeve 54, which outer diameter is slightly less than the diameter of the metallic pipe 2, and which inner diameter is substantially equal to the outer diameter of the contracted end of the plastic pipe 3.

A tool according to figure 4 can also be used.

The next step is to reduce the outer diameter of the prefabricated plastic material pipe using a tool 50 which comprises a drawing ring 56, provided with a truncated cone-shaped opening 57, used to reduce the outer diameter of the prefabricated plastic material pipe 3 to an outer diameter slightly less than the inner diameter of the metallic pipe 2.

According to the type of plastic material, diameter reduction in the drawing ring 56 can be carried out in cold or heated state. For a heated reduction, drawing ring 56 has a heating device (not illustrated in detail) for heating the plastic material.

Tool 50 can be similar to tool 10 of figure 2, and it is provided with injection means for filling material or adhesive.

As the plastic material pipe 3 is moved into the metallic pipe 2 dragged by tool 50, a pasty filling material or adhesive is injected in the gap formed between both pipes, using the injection tool 55, as previously described.

The traction tool 50 movement stops once the contracted front end of the plastic pipe completely exits from the metallic pipe 2. Then, the plastic material pipe is cut level, and both ends are worked.

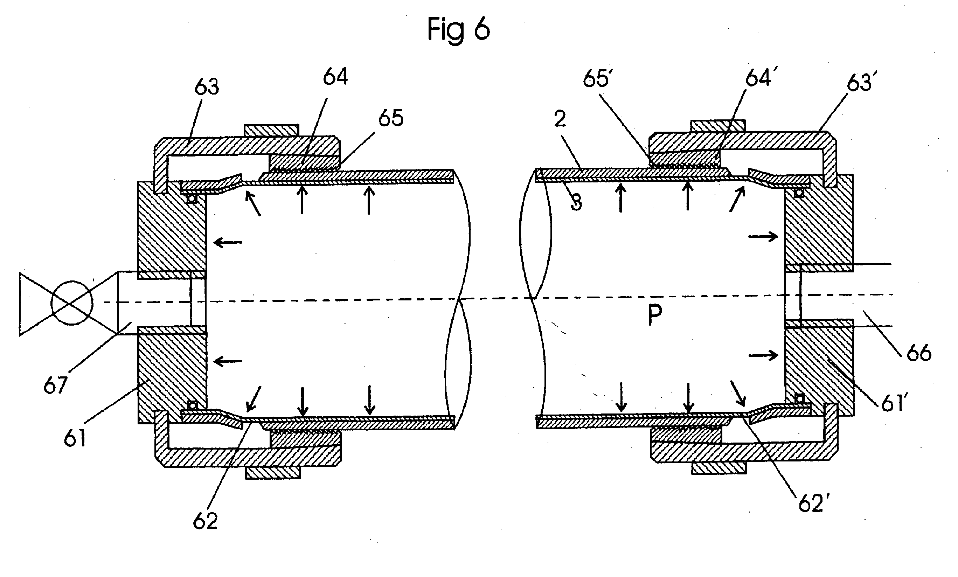

In another embodiment of the invention procedure shown in figure 6, a prefabricated thermoplastic material pipe 3 with outer diameter less than the inner diameter of the metallic pipe 2 is inserted into the latter. The diameter being less, introduction does not present resistance. Then both ends of the plastic material pipe are closed with corresponding flanges 61, 61'. Ends 62, 62' of the plastic pipe, protruding from the steel pipe, are fixed to the peripheral edges of flanges 61, 61'. These flanges are mechanically fixed to the metallic pipe 2 by means of corresponding clamps 63, 63', which have grippers 64, 64' inside, provided with sawtoothed grooves 65, 65' able to seize to the peripheral outer surface of the metallic pipe, axially holding the corresponding closing flange. Flanges have in each case an inlet conduit 66 and an outlet conduit 67 for heating fluid.

The procedure comprises heating the thermoplastic material pipe 3, already inserted into the metallic pipe, with a heating fluid, later expansion of the plastic pipe applying pressure using the same heating fluid, and cooling of the plastic pipe with the operative fluid. Once discharged the operative fluid, all described tools are detached, the plastic pipe is leveled, and finally both ends of the lined metallic pipe are worked.

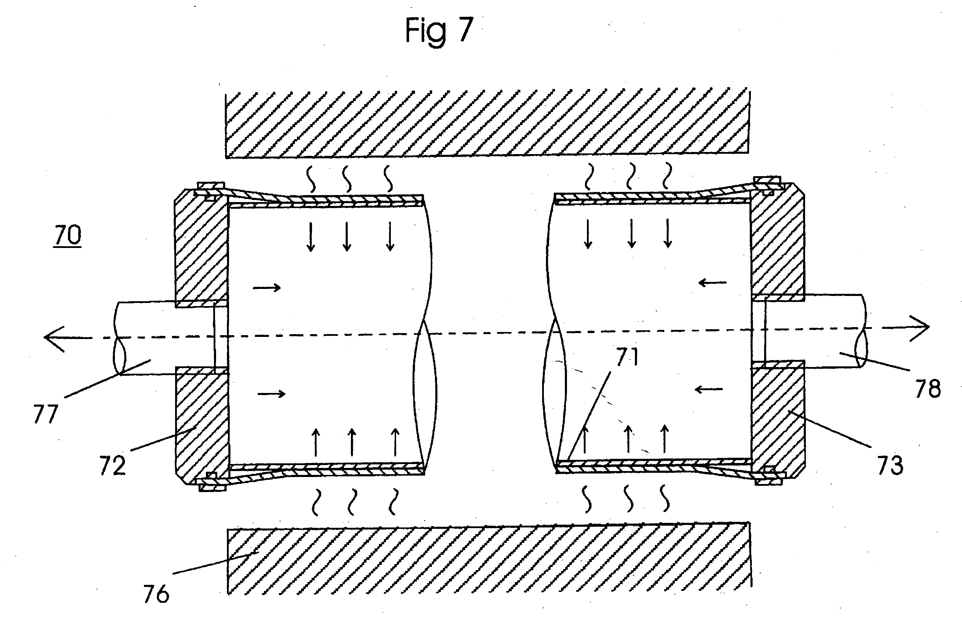

In another embodiment shown in figure 7, a commercially available prefabricated thermoplastic material pipe is used. This pipe has an outer diameter greater than the inner diameter of the steel pipe.

In this case, a tool 70 for sealing and supporting of the thermoplastic material pipe on its inside is used. This tool comprises a perforated support tube 71, preferably of steel, which has sealing flanges 72, 73 at both ends. These flanges are substantially similar to the flanges described in relation to figure 6. The perforated support tube 71 and said flanges 72,73 are coaxially placed.

Outer diameter of the sealing flanges 72, 73 is substantially equal to the inner diameter of the thermoplastic material pipe. The latter ends are tightly fixed on said flanges, being the outer diameter of the inner support tube 71 slightly less than the diameter of the sealing flanges.

The latter invention procedure includes an operative step, which includes placing the prefabricated plastic material pipe 3 on tool 70, inserting the plastic pipe together with the auxiliary tool into a heating device, as for example a tubular oven 76, and heating the plastic pipe by means of thermal radiation. Once the thermoplastic material of the pipe is in a deformable state, vacuum is applied to the interior of the auxiliary tool 70 through conduits 77, 78, coupled to each one of the sealing flanges 72, 73.

Due to the difference between atmospheric pressure and the vacuum applied to the thermoplastic material pipe, in a deformable state due to heating, the pipe is contracted and lays on the periphery of the support steel tube 71, which prevents it from collapsing.

Next, the auxiliary tool 71 is dismounted and detached from the plastic pipe 3 in order to cut the ends, which have substantially the same diameter than clamps 72, 73. Then, expansion of the contacted pipe is carried out, in the same way as described in relation to figure 6.

### Example of Application

A pipeline was build using composite pipes according to the present invention, to convey oil, comparing its behavior with a reference pipeline built by conventional techniques.

The reference pipeline had a length of 1800 meters, and was intended to convey a mixture of oil and formation water on an elevation about 100 meters over the level of a pumping station.

The steel pipe had a diameter of 30 cm, and a wall thickness of 6.35 mm. It was lined with nylon 11 with a 250- 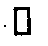 m thickness. Before start-up, the lining was damaged trying to remove stones and boulders from the pipeline using a pipe scraper (pig).

After about four months of service, the pipeline was perforated due to local corrosion at the elevation ridge.

The area of maximum elevation suffered severe corrosion in those points where the lining had been damaged. Corrosion was less evident in other lower places. The pipeline conveyed a flow of 6000 m³ a-day under a working pressure of 30 bar and a temperature of 30°C.

### Preliminary examination of pipelines samples

The laboratory received and examined photographs, documentation, samples of water/oil, residues, and samples from the reference pipeline. Microscopic evaluation of the nylon 11 lining in the samples showed good adhesion to the metallic substrate. Upon separation of the lining from the steel, the steel surface was free from contamination or corrosion, having a well-defined shot blasting profile. Cross section of the lining showed about 5% porosity in closed cells with pores up to 25 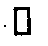 m-diameter.

The lining underwent mechanical damage, which caused scratchs on the lining which reached the metal. One 10 mm-long/3 mm-wide scratch on the lining was examined using stereoscopic magnifying glass. Upon removal of the lining, it was found that a circular corrosion hole of 10 mm in diameter and 3 mm in depth had been formed under it. The base of the hole was rounded with stepped walls.

### Analysis of corrosion products

The corrosion product present in the hole was a brown-black mass, which bubbles over slightly in 10%-acetic acid, indicating the presence of iron carbonate III base. The corrosion product was partially soluble in 10%-hydrochloric acid.

The dark matter was ferromagnetic, formed by thin needle-shaped crystals, which could have been the result of a selective corrosion in certain steel phases. The hole also contained a small quantity of earth.

When the upper layer of the corrosion product was removed, a darker glassy layer was found touching the steel. Half of the hole and surrounding steel was cut from the pipe sample, and the content of the corrosion hole was analyzed using a electronicroscope scanning by X-ray energy dispersive spectroscopy (EDS).

Elements of particular interest are shown in the following table.

| Element | Upper layer - % | Lower layer - % |
|---|---|---|
| Carbon | 1,6 | 1,9 |
| Oxygen | 1,0 | 0,8 |
| Sulfur | 0,9 | 1,3 |
| Chlorine | 7,3 | 3,3 |

The low oxygen concentration in the hole content confirmed that a great part were fragments of non-corroded steel. Carbon content confirm the presence of carbonates. The high content of chlorine was evidence of chlorine ion pickling. The sulfur content is apparently due to the presence of sulfate ions in the formation water.

### Metallographic analysis

The pipe sample was cut in the middle of the corroded hole and surrounding steel, it was assembled and polished in a way that allowed the steel to be examined in the interface with the corrosion product in the hole. It could be observed that corrosion advanced as deep and penetrating holes, almost as cracks, which separated as steel needles in the corrosion hole.

The surface was subject to a treatment with natal solution (nitric acid and alcohol), and examined under metallographer it showed that the corrosion process selectively destroyed the cementite phase of steel.

The corrosion process comprised an attack to the cementite particle and formation of a fracture through the ferrite until reaching the next cementite particle. The ferritic phase, which constitutes the major part of steel, has been deposited undamaged in the corrosion hole.

This corrosion process explains the speed of penetration in the pipe wall.

### Comparative Example

Composite pipes with a thickness of the inner plastic material pipe of 5 mm according to the present invention were used under similar conditions.

After 6 months of similar service, no perforation was observed. After cutting, some of the pipes showed scratchs on the plastic material, which were probably the result of abrasion caused by sand drawn by the mixture of oil and water, but none of them were deep enough to reach the steel pipe. When the plastic material was removed, no damaged could be observed on the steel pipe.

## Claims

1. A composite pipe formed by an outer metallic pipe and an inner lining of plastic material, with resistance to internal and external pressure defined by the metallic pipe properties, and resistance to corroding agents defined by the plastic material properties, **characterized in that** the inner lining consists of a prefabricated plastic material pipe inserted into the metallic pipe, interposing a mechanical load transmission means capable of transmitting the internal pressure existing in the plastic material pipe to the metallic pipe.

2. The composite pipe of claim 1, **characterized in that** the mechanical load transmission means is a setting filling material.

3. The composite pipe of claim 2, **characterized in that** the filling material comprises an inert powdered material and a hardening resin which sets at room temperature, this resin being in pasty state before setting.

4. The composite pipe of claim 1, **characterized in that** the mechanical load transmission means comprises a filling material formed by an inert powdered material and another material which sets with water or diluent.

5. The composite pipe of claims 1 to 4, **characterized in that** the prefabricated plastic material pipe has on its outer peripheral surface at least three ribs extending parallel to the pipe generatrix direction, evenly spaced on the pipe's periphery, these ribs covering the whole length of the plastic tube and about between 5 and 20% of the perimeter of the plastic material pipe; radial height of said ribs is slightly less than the radial space of the gap defined between both concentric pipes, which annular gap is occupied by the filling material.

6. The composite pipe of claim 1, **characterized in that** the mechanical load transmission means is an adhesive compatible with the materials of both pipes, being the outer diameter of the inner lining substantially equal to the inner diameter of the metallic pipe.

7. A method for manufacturing a composite pipe formed by a metallic pipe with inner lining of plastic material according to at least one of claims 1 thru 6, **characterized by** inserting a prefabricated plastic material into a metallic pipe and interposing a mechanical load transmission means.

8. The method of claim 7, **characterized in that** the prefabricated plastic material pipe has an outer diameter less than the inner diameter of the metallic pipe, the prefabricated plastic material pipe is grasped by one its ends and dragged into the metallic pipe, and at the same time a setting filling material is injected by means of an injection tool into the metallic pipe in the gap formed between the portion of plastic material pipe being inserted into the metallic pipe and the corresponding extreme portion of the metallic pipe, dragging said setting filling material until substantially fulfill the gap between both pipes, and then letting the filling material to set.

9. The method of claim 7, **characterized in that** the plastic material pipe has an outer diameter slightly greater than the inner diameter of the metallic pipe, reducing the diameter of the plastic material pipe during its insertion into the metallic pipe by means of a drawing ring disposed in front of the injection tool.

10. The method of claim 7, **characterized in that** the prefabricated pipe is of thermoplastic material, having an outer diameter less than the inner diameter of the metallic pipe and a greater length, the plastic material pipe is completely inserted into the metallic pipe, closed at both protruding ends, heated up to deformation temperature, using a heating fluid, and finally expanded using said fluid under internal pressure, hydraulic or pneumatic.

11. The method of claim 7, **characterized in that** the prefabricated pipe is of thermoplastic material with a diameter equal or slightly greater than the metallic pipe, the thermoplastic material pipe is closed at both ends before being inserted into the metallic pipe and its diameter is reduced applying vacuum inside and thermal radiation outside, the thermoplastic pipe is inserted into the metallic pipe with its ends closed, and finally expanded by applying pressure with a heating fluid.

12. Use of a composite pipe according to claims 1 thru 6 and/or manufactured by the method of claims 7 thru 11 for conveying chemically and/or mechanically aggressive fluids.
